# EUROPÄISCHE PATENTSCHRIFT

(11) **EP 3 190 277 B1**
(45) Veröffentlichungstag und Bekanntmachung des Hinweises auf die Patenterteilung: **26.09.2018**
(21) Anmeldenummer: 17150436.8
(22) Anmeldetag: 05.01.2017
(51) Int. Cl.: F01N 3/20, F01N 3/02, F01N 5/02

(54) **ABGASANLAGE FÜR EINE BRENNKRAFTMASCHINE UND VERFAHREN ZUM BETREIBEN EINER SOLCHEN**
EXHAUST GAS SYSTEM FOR AN INTERNAL COMBUSTION ENGINE AND METHOD FOR OPERATING SUCH AN EXHAUST GAS SYSTEM
SYSTÈME D'ÉCHAPPEMENT POUR UN MOTEUR À COMBUSTION INTERNE ET PROCÉDÉ DE COMMANDE D'UN TEL SYSTÈME D'ÉCHAPPEMENT

(30) Priorität: 11.01.2016 DE 102016100284
(43) Veröffentlichungstag der Anmeldung: 12.07.2017
(73) Patentinhaber: Eberspächer Exhaust Technology GmbH & Co. KG, 66539 Neunkirchen (DE)
(72) Erfinder: Gaiser, Gerd, 72768 Reutlingen (DE); Frobenius, Fabian, 73728 Esslingen (DE); Weller, Bernd, 73568 Durlangen (DE)
(74) Vertreter: RLTG

(56) Entgegenhaltungen:
- WO-A1-2006/087553
- WO-A1-2008/066482
- WO-A1-2011/000685
- JP-A- H06 272 539
- JP-A- 2004 132 286
- US-B1- 6 361 754

## Beschreibung

Die vorliegende Erfindung betrifft eine Abgasanlage für eine Brennkraftmaschine, insbesondere für ein Fahrzeug, gemäß dem Oberbegriff des Anspruchs 1, umfassend ein abgasführendes Rohr und eine Reaktionsmittelabgabeanordnung zur Abgabe von Reaktionsmittel in in dem abgasführenden Rohr strömendes Abgas, wobei die Reaktionsmittelabgabeanordnung eine Reaktionsmitteleinspritzanordnung, eine Reaktionsmittel von einem Reaktionsmittelreservoir zu der Reaktionsmitteleinspritzanordnung fördernde Reaktionsmittelförderanordnung und eine Heizanordnung zur Erwärmung von zu der Reaktionsmitteleinspritzanordnung gefördertem Reaktionsmittel umfasst. Ferner betrifft die vorliegende Erfindung ein Verfahren zum Betreiben einer derart aufgebauten Abgasanlage insbesondere während des Betriebs einer mit dieser Abgasanlage verbunden Brennkraftmaschine.

Die US 6 361 754 B1 offenbart eine Abgasanlage für eine Brennkraftmaschine gemäß dem Oberbegriff des Anspruchs 1. Ein Reaktionsmitteldrucksensor ist bei dieser bekannten Abgasanlage stromabwärts bezüglich der eine Abgas/Reaktionsmittel-Wärmetauscheranordnung und eine elektrisch betreibbare Heizeinheit umfassenden Heizanordnung angeordnet.

Die JP 2004 132286 A offenbart eine Abgasanlage, bei welcher das durch zwei seriell arbeitende Pumpen geförderte Reaktionsmittel zunächst in einer Abgas/Reaktionsmittel-Wärmetauscheranordnung einer Heizanordnung erwärmt wird und dann in einer elektrisch betreibbaren Heizeinheit der Heizanordnung weiter erwärmt wird. In der Wärmetauscheranordnung und der Heizeinheit wird die Temperatur des diese durchströmenden Reaktionsmittels durch diesen jeweils zugeordnete Temperatursensoren erfasst. In Abhängigkeit von diesen erfassten Temperaturen werden die Heizeinheit und die Wärmetauscheranordnung derart angesteuert, dass die Temperatur des Reaktionsmittels bei einem Wert unter der Siedetemperatur gehalten wird.

Aus der DE 10 2006 049 591 A1 ist eine Abgasanlage bekannt. Bei dieser bekannten Abgasanlage wird dem in einem abgasführenden Rohr strömenden Abgas Harnstoff bzw. eine Harnstoff/Wasser-Lösung als Reaktionsmittel zugeführt. Mit dem dem Abgas beigemischten Harnstoff/Wasser-Gemisch erfolgt im Bereich einer in der Abgasanlage bzw. in dem abgasführenden Rohr vorgesehenen Katalysatoranordnung eine selektive katalytische Reduktion, bei welcher Stickoxide zu Stickstoff umgesetzt werden.

Um die Durchmischung des Harnstoff/Wasser-Gemisches mit dem Abgas zu verbessern, wird bei dieser bekannten Abgasanlage das Harnstoff/Wasser-Gemisch vor Abgabe in das Abgas in einen überhitzten Zustand gebracht. Hierzu weist diese bekannte Abgasanlage eine Heizanordnung mit einer elektrisch betreibbaren Heizeinheit auf, welche die Temperatur des Harnstoff/Wasser-Gemisches auf eine Überhitzungstemperatur anhebt. Um das Verdampfen des Harnstoff/WasserGemisches noch vor Abgabe in das Abgas zu verhindern, wird durch eine das Harnstoff/Wasser-Gemisch fördernde Pumpe der Druck dieses Gemisches auf einen über dem in Zuordnung zu der Überhitzungstemperatur vorhandenen Dampfdruck liegenden Druck angehoben. Bei Abgabe des zunächst in überhitztem, flüssigem Zustand gehaltenen Harnstoff/Wasser-Gemisches in das Abgas entspannt dieses sich spontan, so dass es einerseits zu einer teilweisen Verdampfung dieses Gemisches, andererseits zur Erzeugung feinster Flüssigkeitspartikel kommt und eine sehr gute Durchmischung des dem Abgas beigemischten Reaktionsmittels mit dem Abgas erreicht wird.

Es ist die Aufgabe der vorliegenden Erfindung, eine Abgasanlage für eine Brennkraftmaschine, insbesondere für ein Fahrzeug, sowie ein Verfahren zum Betreiben einer derartigen Abgasanlage vorzusehen, mit welchen eine ausreichende Erwärmung des Reaktionsmittels bei reduziertem Energieeinsatz erreicht werden kann.

Erfindungsgemäß wird diese Aufgabe gelöst durch eine Abgasanlage für eine Brennkraftmaschine, insbesondere für ein Fahrzeug, gemäß Anspruch 1. Diese umfasst ein abgasführendes Rohr und eine Reaktionsmittelabgabeanordnung zur Abgabe von Reaktionsmittel in in dem abgasführenden Rohr strömendes Abgas, wobei die Reaktionsmittelabgabeanordnung eine Reaktionsmitteleinspritzanordnung, eine Reaktionsmittel von einem Reaktionsmittelreservoir zu der Reaktionsmitteleinspritzanordnung fördernde Reaktionsmittelförderanordnung und eine Heizanordnung zur Erwärmung von zu der Reaktionsmitteleinspritzanordnung gefördertem Reaktionsmittel umfasst.

Dabei ist vorgesehen, dass die Heizanordnung eine Abgas/Reaktionsmittel-Wärmetauscheranordnung zur Übertragung von in dem Abgas transportierter Wärme auf das Reaktionsmittel umfasst.

Die erfindungsgemäße Abgasanlage umfasst ferner eine Ansteueranordnung zum Ansteuern der Reaktionsmittelförderanordnung und der Reaktionsmittelabgabeanordnung.

Ferner ist im Strömungsweg des Reaktionsmittels zwischen der Reaktionsmittelförderanordnung und der Reaktionsmitteleinspritzanordnung wenigstens ein Reaktionsmitteldrucksensor vorgesehen. Die Ansteueranordnung ist dazu ausgebildet, die Reaktionsmittelförderanordnung beruhend auf einem von dem Reaktionsmitteldrucksensor erfassten Reaktionsmitteldruck anzusteuern. Durch das Erfassen des Reaktionsmitteldrucks wird es möglich, eine Druckregelung durchzuführen, so dass gewährleistet ist, dass der Druck des Reaktionsmittels insbesondere auch im Bereich der Heizanordnung über dem Dampfdruck des vorzugsweise in einen überhitzten Zustand gebrachten Reaktionsmittels liegt.

Weiter ist im Strömungsweg des Reaktionsmittels zwischen der Heizanordnung und der Reaktionsmitteleinspritzanordnung wenigstens ein Reaktionsmitteltemperatursensor vorgesehen, und die Ansteueranordnung ist dazu ausgebildet, die Reaktionsmittelförderanordnung beruhend auf einer von dem Reaktionsmitteltemperatursensor erfassten Reaktionsmitteltemperatur anzusteuern.

Um bei vergleichsweise großer einzuspritzender Reaktionsmittelmengen eine ausreichende Erwärmung des Reaktionsmittels auf die Überhitzungstemperatur gewährleisten zu können, umfasst die Heizanordnung eine elektrisch betreibbare Heizeinheit. Dabei ist die Ansteueranordnung ferner zum Ansteuern der elektrisch betreibbaren Heizeinheit der Heizanordnung ausgebildet.

Weiter ist bei der erfindungsgemäßen Abgasanlage der Reaktionsmitteldrucksensor stromaufwärts bezüglich der elektrisch betreibbaren Heizeinheit angeordnet.

Die Erfassung der Reaktionsmitteltemperatur gibt einerseits die Möglichkeit, sicherzustellen, dass diese Temperatur beispielsweise im Bereich einer Soll-Überhitzungstemperatur liegt. Andererseits kann durch Erfassung der Temperatur anhand entsprechender beispielsweise in der Ansteueranordnung hinterlegter Daten der zugehörige Dampfdruck ermittelt werden, und die Reaktionsmittelförderanordnung kann so angesteuert werden, dass der durch diese generierte Reaktionsmitteldruck über diesem Dampfdruck liegt.

Die erfindungsgemäße Abgasanlage nutzt die im Verbrennungsabgas einer Brennkraftmaschine transportierte Wärme, um das in das Abgas einzuspritzende Reaktionsmittel zu erwärmen, insbesondere in einen Überhitzungszustand zu bringen, um somit den vorangehend beschriebenen Effekt einer spontanen Reaktionsmittelverdampfung bei Abgabe des Reaktionsmittels in das Abgas zu erreichen. Da das im abgasführenden Rohr strömende Abgas eine sehr hohe Temperatur aufweist, kann die erfindungsgemäße Abgasanlage grundsätzlich so betrieben bzw. aufgebaut werden, dass keine zusätzliche elektrische Energie zum Erwärmen des Reaktionsmittels auf die Überhitzungstemperatur erforderlich ist. Dies vermindert die Belastung eines Bordspannungssystems in einem Fahrzeug deutlich, da die insbesondere bei Nutzfahrzeugen zum Überhitzen des Reaktionsmittels erforderliche Wärmeleistung im Bereich von bis zu 1,5 kW liegen kann.

Bei einem besonders einfach zu realisierenden Aufbau wird vorgeschlagen, dass die Abgas/Reaktionsmittel-Wärmetauscheranordnung einen Wärmetauscherleitungsbereich in einer Reaktionsmittel zu der Reaktionsmitteleinspritzanordnung führenden Reaktionsmittelleitung umfasst.

Dabei kann ein sehr effizienter Wärmeübertrag dadurch gewährleistet werden, dass der Wärmetauscherleitungsbereich sich wenigstens bereichsweise, vorzugsweise im Wesentlichen vollständig, im Inneren des abgasführenden Rohrs erstreckt.

Eine Vergrößerung der zur Wärmeübertragung nutzbaren Wechselwirkungslänge kann dadurch erreicht werden, dass der Wärmetauscherleitungsbereich sich im Inneren des abgasführenden Rohrs windungsartig erstreckt, vorzugsweise schraubenartig oder/und spiralartig oder/und mäanderartig.

Um durch den im Inneren des abgasführenden Rohrs sich erstreckenden Wärmetauscherleitungsbereich eine Beeinträchtigung des Abgasstroms zu vermeiden, wird vorgeschlagen, dass der Wärmetauscherleitungsbereich sich nahe einer Innenoberfläche oder/und an einer Innenoberfläche des abgasführenden Rohrs anliegend erstreckt. Um den Wärmeübertrag vom Abgas auf das in dem Wärmetauscherleitungsbereich strömende Reaktionsmittel noch weiter zu verbessern, wird vorgeschlagen, dass an dem Wärmetauscherleitungsbereich wenigstens eine, vorzugsweise eine Mehrzahl von Wärmeübertragungsrippen vorgesehen ist, vorzugsweise mit zu einer Abgasströmungsrichtung im Wesentlichen parallelen Wärmeübertragungsoberflächen. Insbesondere wenn die Wärmeübertragungsoberflächen derartiger Wärmeübertragungsrippen im Wesentlichen parallel zur Abgasströmungsrichtung im Bereich dieses Wärmetauscherleitungsbereichs ausgerichtet sind, wird eine Beeinträchtigung des Abgasstroms vermieden.

Bei einer alternativen, mit der vorangehend beschriebenen Ausgestaltung auch kombinierbaren Ausgestaltung der erfindungsgemäßen Abgasanlage wird vorgeschlagen, dass der Wärmetauscherleitungsbereich sich wenigstens bereichsweise, vorzugsweise im Wesentlichen vollständig außerhalb des abgasführenden Rohrs erstreckt. Eine derartige Anordnung ist insbesondere dann vorteilhaft, wenn aufgrund baulicher Vorgaben das Vorsehen zusätzlicher Komponenten im Inneren eines abgasführenden Rohrs nicht realisierbar ist.

Um auch bei derartiger Positionierung des Wärmetauscherleitungsbereichs außerhalb des abgasführenden Rohrs einen effizienten Wärmeübertrag zu gewährleisten, wird vorgeschlagen, dass der Wärmetauscherleitungsbereich sich nahe einer Außenoberfläche oder/und an einer Außenoberfläche des abgasführenden Rohrs anliegend erstreckt, vorzugsweise dieses schraubenartig oder/und mäanderartig umgebend.

Zum Vermeiden von Wärmeverlusten nach außen, insbesondere in demjenigen Bereich, in welchem der Wärmetauscherleitungsbereich mit dem abgasführenden Rohr zur Wärmeübertragung zusammenwirkt, wird vorgeschlagen, dass das abgasführende Rohr wenigstens in seinem mit dem Wärmetauscherleitungsbereich zusammenwirkenden Längenbereich von Isoliermaterial wenigstens bereichsweise umgeben ist.

Die Heizeinheit kann dabei vorteilhafterweise in Strömungsrichtung stromaufwärts bezüglich des Wärmetauscherleitungsbereichs angeordnet sein, so dass z.B. zunächst das Reaktionsmittel in der Heizeinheit durch elektrische Erregung derselben vorgewärmt wird und beim Durchströmen des Wärmetauscherleitungsbereichs dann in den Überhitzungszustand gelangt.

Bei einer alternativen Ausgestaltung wird vorgeschlagen, dass die Heizeinheit in Strömungsrichtung des Reaktionsmittels stromabwärts bezüglich des Wärmetauscherleitungsbereichs angeordnet ist. Bei dieser Anordnung wird das Reaktionsmittel zunächst durch thermische Wechselwirkung mit dem Abgas vorgewärmt, und die dann zum Überhitzen des Reaktionsmittels noch erforderliche Wärmemenge wird durch entsprechende Erregung der Heizeinheit bereitgestellt.

Die Reaktionsmittelförderanordnung ist vorzugsweise in Strömungsrichtung des Reaktionsmittels stromaufwärts der Heizanordnung angeordnet, so dass gewährleistet werden kann, dass durch die Reaktionsmittelförderanordnung der den Dampfdruck des überhitzten Reaktionsmittels übersteigende Reaktionsmitteldruck erzeugt und auch beibehalten werden kann, so dass im Bereich der Heizanordnung nicht die Gefahr der Reaktionsmittelverdampfung besteht.

Die Ansteueranordnung kann dazu ausgebildet sein, die elektrisch betreibbare Heizeinheit der Heizanordnung oder/und die Reaktionsmitteleinspritzanordnung beruhend auf einem von dem Reaktionsmitteldrucksensor erfassten Reaktionsmitteldruck anzusteuern.

Alternativ oder zusätzlich kann die Ansteueranordnung dazu ausgebildet ist, die elektrisch betreibbare Heizeinheit der Heizanordnung oder/und die Reaktionsmitteleinspritzanordnung beruhend auf einer von dem Reaktionsmitteltemperatursensor erfassten Reaktionsmitteltemperatur anzusteuern.

Die vorliegende Erfindung betrifft ferner ein Verfahren zum Betreiben einer erfindungsgemäß aufgebauten Abgasanlage, bei welchem Verfahren die Ansteueranordnung die Reaktionsmittelförderanordnung derart ansteuert, dass der Reaktionsmitteldruck über dem Dampfdruck des durch die Heizanordnung erwärmten Reaktionsmittels liegt.

Ferner wird vorzugsweise die elektrisch betreibbare Heizeinheit durch die Ansteueranordnung derart angesteuert, dass das durch die Heizanordnung erwärmte Reaktionsmittel in einen Überhitzungszustand gebracht wird, vorzugsweise derart, dass die Reaktionsmitteltemperatur im Bereich einer Soll-Überhitzungstemperatur liegt.

Die vorliegende Erfindung wird nachfolgend mit Bezug auf die beiliegenden Figuren detailliert beschrieben. Es zeigt:
- Fig. 1: in prinzipieller Darstellung eine Abgasanlage mit einem abgasführenden Rohr und einer Reaktionsmittelabgabeanordnung;
- Fig. 2: eine der Fig. 1 entsprechende Darstellung einer alternativen Ausgestaltungsart einer Abgasanlage;
- Fig. 3: eine der Fig. 1 entsprechende Darstellung einer alternativen Ausgestaltungsart einer Abgasanlage;
- Fig. 4: eine der Fig. 1 entsprechende Darstellung einer alternativen Ausgestaltungsart einer Abgasanlage;
- Fig. 5: eine der Fig. 1 entsprechende Darstellung einer alternativen Ausgestaltungsart einer Abgasanlage;
- Fig. 6: eine der Fig. 1 entsprechende Darstellung einer alternativen Ausgestaltungsart einer Abgasanlage;
- Fig. 7: eine der Fig. 1 entsprechende Darstellung einer alternativen Ausgestaltungsart einer Abgasanlage;
- Fig. 8: eine der Fig. 1 entsprechende Darstellung einer nicht gemäß den Prinzipien der Erfindung aufgebauten Abgasanlage;
- Fig. 9: eine der Fig. 1 entsprechende Darstellung einer alternativen Ausgestaltungsart einer Abgasanlage;
- Fig. 10: eine der Fig. 1 entsprechende Darstellung einer nicht gemäß den Prinzipien der Erfindung aufgebauten Abgasanlage.

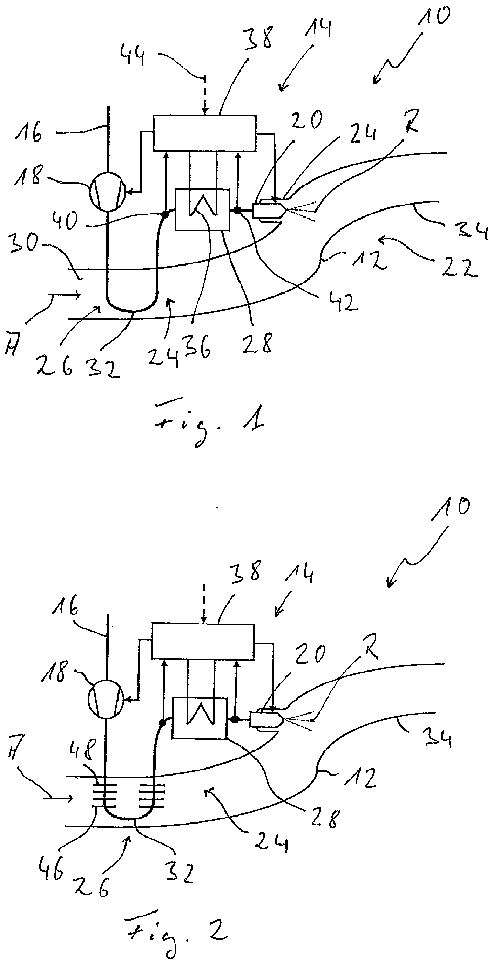

In Fig. 1 ist eine Abgasanlage, Beispielweise für eine Brennkraftmaschine eines Fahrzeugs, allgemein mit 10 bezeichnet. Die Abgasanlage 10 umfasst ein abgasführendes Rohr 12, welches das von einer Brennkraftmaschine ausgestoßene Abgas A in Richtung zu einer Katalysatoranordnung führt.

Eine Reaktionsmittelabgabeanordnung 14 umfasst eine Reaktionsmittelleitung 16, über welche Reaktionsmittel R, beispielsweise eine Harnstoff/Wasser-Lösung oder ein anderes Reduktionsmittel, wie z.B. Denoxium oder Isocyansäure, von einem nicht dargestellten Reaktionsmittelreservoir vermittels einer in der Reaktionsmittelleitung 16 angeordneten Reaktionsmittelförderanordnung 18 zu einer Reaktionsmitteleinspritzanordnung 20, allgemein auch als Injektor bezeichnet, gefördert wird. Die Reaktionsmitteleinspritzanordnung 20 ist in dem in Fig. 1 dargestellten Beispiel in einem vom abgasführenden Rohr 12 in einem Krümmungsbereich 22 desselben abzweigenden Einsatzstutzen 24 angeordnet, so dass das von der Reaktionsmitteleinspritzanordnung 20 in das Abgas A eingespritzte Reaktionsmittel R im Wesentlichen in der Strömungsrichtung des Abgases A in diesen Bereich eingeleitet wird.

Die Reaktionsmittelabgabeanordnung 14 umfasst ferner eine allgemein mit 24 bezeichnete Heizanordnung. In dem in Fig. 1 dargestellten Ausgestaltungsbeispiel umfasst die Heizanordnung 24 eine Abgas/Reaktionsmittel-Wärmetauscheranordnung 26 und eine elektrisch betreibbare Heizeinheit 28. In dem in Fig. 1 dargestellten Ausgestaltungsbeispiel ist im Strömungsweg zwischen der Abgasförderanordnung 18, beispielsweise Pumpe, und der Reaktionsmitteleinspritzanordnung 20 die Abgas/Reaktionsmittel-Wärmetauscheranordnung 26 stromaufwärts bezüglich der Heizeinheit 28 angeordnet.

Die Abgas/Reaktionsmittel-Wärmetauscheranordnung 26 umfasst einen im Inneren 30 des abgasführenden Rohrs 12 sich erstreckenden Wärmetauscherleitungsbereich 32 der Reaktionsmittelleitung 16. Bei dem in Fig. 1 dargestellten Ausgestaltungsbeispiel erstreckt sich der Wärmetauscherleitungsbereich 32 durch die Wandung 34 des abgasführenden Rohrs 12 hindurch, erstreckt sich bogenartig im Inneren 30 des abgasführenden Rohrs 12 und durchsetzt dann die Wandung 34 des abgasführenden Rohrs 12 wieder, um zur Heizeinheit 28 zu führen.

Die Heizeinheit 28 kann einen Leitungsbereich umfassen, in welchem beispielsweise ein durch elektrische Erregung erhitzbarer Heizleiter 36 angeordnet und vom Reaktionsmittel umströmbar ist. Alternativ oder zusätzlich kann ein derartiger Heizleiter einen Bereich der Reaktionsmittelleitung 16 außen umgebend angeordnet sein, um so Wärme auf das in der Reaktionsmittelleitung 16 geführte flüssige Reaktionsmittel zu übertragen.

Um die Abgasanlage 10 betreiben zu können, ist eine allgemein mit 38 bezeichnete Ansteueranordnung vorgesehen. Die Ansteueranordnung 38 steht in Ansteuerverbindung mit der Reaktionsmittelförderanordnung 18, der Reaktionsmitteleinspritzanordnung 20 und der Heizeinheit 28 und kann diese zur Durchführung des geforderten Betriebs ansteuern bzw. erregen. Die Ansteueranordnung 38 empfängt das Ausgangssignal von einem Drucksensor 40, der im dargestellten Beispiel stromaufwärts bezüglich der Heizeinheit 28 und stromabwärts bezüglich der Reaktionsmittelförderanordnung 18 bzw. auch der Abgas/Reaktionsmittel-Wärmetauscheranordnung 26 angeordnet ist und somit den Reaktionsmitteldruck in einem Bereich zwischen der Reaktionsmittelförderanordnung 18 und der Reaktionsmitteleinspritzanordnung 20 erfasst.

Der Ansteueranordnung 38 wird ferner das Ausgangssignal eines Temperatursensors 42 zugeführt, welcher im dargestellten Beispiel stromabwärts bezüglich der Heizeinheit 28 und somit bezüglich der gesamten Heizanordnung 24 und stromaufwärts bezüglich der Reaktionsmittelabgabeanordnung 20 angeordnet ist. Der Temperatursensor 42 kann somit die Temperatur des durch die Heizanordnung 24 erwärmten Reaktionsmittels R unmittelbar vor Abgabe durch die Reaktionsmitteleinspritzanordnung 20 erfassen.

Insbesondere unter Berücksichtigung der durch den Temperatursensor 42 erfassten Reaktionsmitteltemperatur steuert die Ansteueranordnung 38 die Heizeinheit 28 derart an, dass die Temperatur des durch die Reaktionsmitteleinspritzanordnung 20 abzugebenden Reaktionsmittels R eine Überhitzungstemperatur ist, vorzugsweise im Bereich einer Soll-Überhitzungstemperatur liegt. Um zu gewährleisten, dass das Reaktionsmittel R nicht bereits vor der Abgabe in das abgasführende Rohr 12, also stromaufwärts der Reaktionsmitteleinspritzanordnung 20, verdampft, steuert die Ansteueranordnung 38 die Reaktionsmittelförderanordnung 18 auch unter Berücksichtigung des vom Drucksensor 40 erfassten Reaktionsmitteldruckes derart an, dass dieser Reaktionsmitteldruck über dem in Zuordnung zu der vorliegenden bzw. zu der einzustellenden Überhitzungstemperatur bestehenden Dampfdruck liegt. Beispielsweise kann die Ansteuerung der Reaktionsmittelförderanordnung 18 derart sein, dass ein vorbestimmter Mindestabstand zwischen dem Dampfdruck und dem durch den Drucksensor 40 erfassten Reaktionsmitteldruck liegt. Durch Berücksichtigung der Reaktionsmitteltemperatur einerseits und des Reaktionsmitteldrucks andererseits kann eine sehr feine Regulierung der Temperatur und des Drucks des Reaktionsmittels erfolgen, so dass beide Größen auch während der Abgabe von Reaktionsmittel R in das Abgas jeweils bei bzw. nahe an einem dafür jeweils vorgegebenen Sollwert gehalten werden können.

Die Ansteuereinheit 38 kann ferner beispielsweise über einen CAN-Bus 44 für den Betrieb der Reaktionsmittelabgabeanordnung 14 relevante Informationen erhalten. Diese können beispielsweise Informationen über den Abgasmassenstrom, die Abgastemperatur oder über den Lastpunkt der das Abgas ausstoßenden Brennkraftmaschine umfassen. Beruhend auf diesen Informationen kann die Ansteueranordnung 38 insbesondere die Reaktionsmitteleinspritzanordnung 20 derart ansteuern, dass in Zuordnung zu der das abgasführende Rohr 12 durchströmenden Abgasmenge die geeignete Menge an Reaktionsmittel R eingespritzt wird. Auch unter Berücksichtigung dieser über die Reaktionsmitteleinspritzanordnung 20 abzugebenden Menge des Reaktionsmittels R kann die Ansteueranordnung 38 die Heizeinheit 28 derart ansteuern, dass gewährleistet ist, dass das abzugebende Reaktionsmittel R die gewünschte Temperatur aufweist. Hierbei kann in einem Regelalgorithmus der Ansteueranordnung 38 insbesondere auch die Abgastemperatur bzw. auch der Abgasmengenstrom berücksichtigt werden, da diese Größen auch maßgebend für den Wärmeeintrag über die Abgas/Reaktionsmittel-Wärmetauscheranordnung 26 sind.

Das in Fig. 1 dargestellte System, bei welchem die Heizanordnung 24 einerseits die Abgas/Reaktionsmittel-Wärmetauscheranordnung 26 und andererseits die Heizeinheit 28 umfasst, werden diese beiden Systembereiche vorteilhafterweise so ausgelegt, dass unter Berücksichtigung der zu erwartenden Abgastemperatur bzw. des zu erwartenden Abgasmengenstroms das Reaktionsmittel R im Bereich der Abgas/Reaktionsmittel-Wärmetauscheranordnung 26 nur teilweise erwärmt wird, die Soll-Temperatur bzw. Soll-Überhitzungstemperatur aber nur durch das zusätzliche Betreiben der Heizeinheit 28 erreichbar ist. Somit wird es möglich, eine Temperaturregelung durchzuführen, bei welcher ein nicht regelbares Übersteigen der Soll-Temperatur vermieden wird. Hierzu wird insbesondere die Wechselwirkungslänge des Wärmetauscherleitungsbereichs 32 so dimensioniert, dass der für eine derartige Vorerwärmung erforderliche Energieeintrag in das Reaktionsmittel dort erfolgen kann. Insbesondere kann auf diese Art und Weise auch gewährleistet werden, dass unvermeidbare Temperaturschwankungen des Abgases durch entsprechende Ansteuerung der Heizeinheit 28 kompensiert werden können.

Nachfolgend werden mit Bezug auf die Fig. 2 bis 10 alternative Ausgestaltungsarten einer derartigen Abgasanlage beschrieben. Komponenten, welche vorangehend beschriebenen Komponenten hinsichtlich Aufbau bzw. Funktion entsprechen, sind mit den gleichen Bezugszeichen bezeichnet. Im Folgenden wird dabei jeweils im Wesentlichen auf die zu der bzw. den vorangehend beschriebenen Ausgestaltungsformen bestehenden Unterschiede eingegangen.

Die in Fig. 2 dargestellte Abgasanlage weist im Bereich des Wärmetauscherleitungsbereichs 32 eine Mehrzahl von im Wesentlichen parallel zueinander angeordneten Wärmeübertragungsrippen 46 auf. Diese plattenartig ausgebildeten und vom Wärmetauscherleitungsbereich 32 durchsetzten Wärmeübertragungsrippen vergrößern durch ihre zur Strömungsrichtung des Abgases A in diesem Bereich im Wesentlichen parallel liegenden Wärmeübertragungsoberflächen 48 die zur thermischen Wechselwirkung zur Verfügung stehende Oberfläche der Abgas/Reaktionsmittel-Wärmetauscheranordnung 26, so dass die im Abgas A transportierte Wärmeenergie effizienter genutzt werden kann.

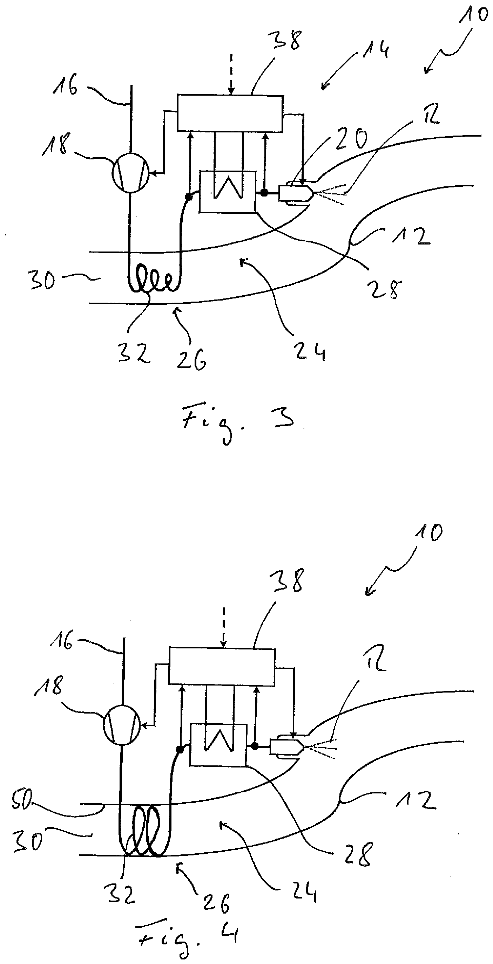

Bei dem in Fig. 3 dargestellten Ausgestaltungsbeispiel ist der Wärmetauscherleitungsbereich 32 im Inneren 30 des abgasführenden Rohrs 12 sich windungsartig erstreckend ausgebildet. Im dargestellten Beispiel ist der Wärmetauscherleitungsbereich 32 sich schraubenartig bzw. auch spiralartig windend ausgebildet, so dass, bezogen auf einen vorbestimmten Längenbereich des abgasführenden Rohrs, eine größere Wechselwirkungslänge des Wärmetauscherleitungsbereichs 32 bereitgestellt werden kann. Es sei darauf hingewiesen, dass auch andere Geometrien, beispielsweise eine mäanderartige Anordnung des Wärmetauscherleitungsbereichs, vorgesehen sein können.

Während bei dem in Fig. 3 dargestellten Ausgestaltungsbeispiel der windungsartig sich erstreckende Wärmetauscherleitungsbereich 32 im Wesentlichen im mittleren Bereich des abgasführenden Rohrs 12, bezogen auf dessen Querschnittsfläche, angeordnet ist, ist bei dem in Fig. 4 dargestellten Ausgestaltungsbeispiel der vorzugsweise mit mehreren Windungen schraubenartig gewundene Wärmetauscherleitungsbereich 32 an einer Innenoberfläche 50 des abgasführenden Rohrs 12 anliegend positioniert. Somit kann das im abgasführenden Rohr 12 strömende Abgas dieses ohne wesentliche Strömungsbehinderung durch den Wärmetauscherleitungsbereich 32 durchströmen, da insbesondere der mittlere Querschnittsbereich des abgasführenden Rohrs 12 freigehalten ist und somit ein geringerer Strömungswiderstand und mithin ein geringerer Druckverlust vorhanden sind.

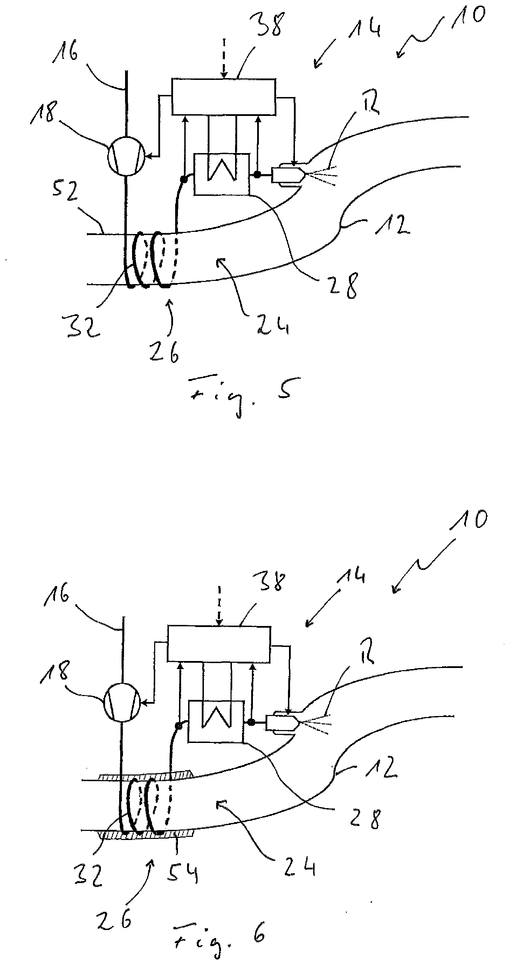

Die Fig. 5 zeigt eine Ausgestaltung, bei welcher der windungsartig sich erstreckender Wärmetauscherleitungsbereich 32 außerhalb des abgasführenden Rohrs 12, vorzugsweise an einer Außenoberfläche 52 desselben anliegend, positioniert ist. Somit wird eine Strömungsbeeinträchtigung im Inneren 30 des abgasführenden Rohrs 12 vollständig vermieden. Durch den direkten Kontakt des Wärmetauscherleitungsbereichs 32 mit der Außenoberfläche 52 des abgasführenden Rohrs 12 wird gleichwohl ein guter Wärmeübertrag gewährleistet. Eine derartige Ausgestaltung ist insbesondere bei Nutzfahrzeugen vorteilhaft, bei welchen das abgasführende Rohr 12 von einer so genannten Abgasbox umgeben ist und auch außerhalb des abgasführenden Rohrs 12 eine vergleichsweise hohe Umgebungstemperatur vorliegt.

Es sei darauf hingewiesen, dass auch bei dieser Ausgestaltungsart der Wärmetauscherleitungsbereich 32 sich in anderer Art gewunden, beispielsweise mäanderartig gewunden, an der Außenoberfläche 52 des abgasführenden Rohrs 12 anliegend erstrecken kann.

Um Wärmeverluste nach außen in demjenigen Bereich, in welchem die Abgas/Reaktionsmittel-Wärmetauscheranordnung 26 mit dem abgasführenden Rohr 12 zusammenwirkt, zu verringern oder zu vermeiden, kann in diesem Längenbereich das abgasführende Rohr 12 von auch den Wärmetauscherleitungsbereich 32 einbettendem Isoliermaterial 54, beispielsweise geschäumtem Material oder Isoliermattenmaterial, umgeben sein. Diese Anordnung ist besonders dort vorteilhaft, wo das abgasführende Rohr 12 außen an einem Fahrzeug freiliegend positioniert ist und vor allem bei vergleichsweise niedrigen Umgebungstemperaturen ein großer Wärmeverlust nach außen hin zu erwarten ist.

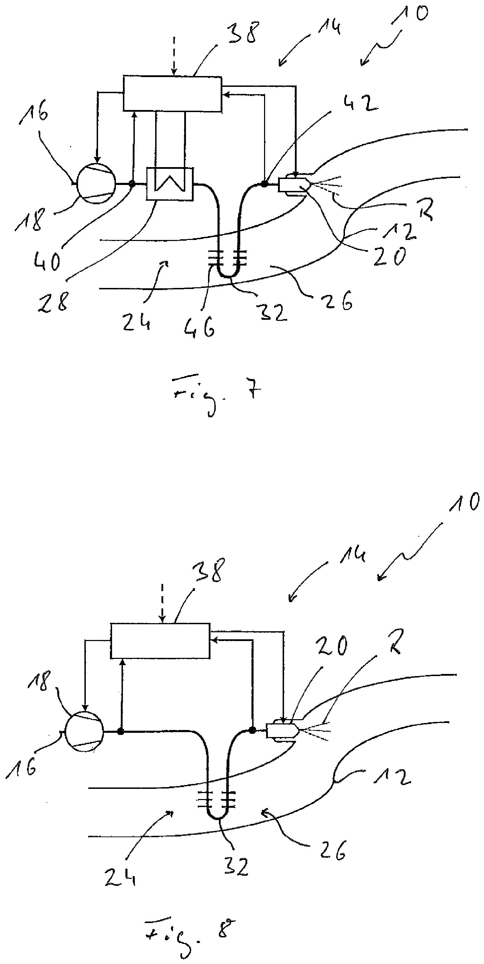

Bei dem vorangehend mit Bezug auf die Fig. 1 bis 6 beschriebenen Ausgestaltungsformen einer Abgasanlage ist die elektrisch betriebene Heizeinheit 28 jeweils stromabwärts bezüglich der Abgas/Reaktionsmittel-Wärmetauscheranordnung positioniert. Die Fig. 7 zeigt demgegenüber eine Ausgestaltung, bei welcher die Heizeinheit 28 stromaufwärts der Abgas/Reaktionsmittel-Wärmetauscheranordnung 26 angeordnet ist, so dass das über die Reaktionsmittelabgabeanordnung 20 abzugebende Reaktionsmittel zunächst durch die Heizeinheit 28 vorerwärmt wird und dann beim Durchströmen des Wärmetauscherleitungsbereichs 32 noch zusätzlich erwärmt wird. Auch bei dieser Ausgestaltung kann durch entsprechende Ansteuerung der Heizeinheit 28 eine sehr feinfühlige Temperaturregelung zum Einstellen der durch den Temperatursensor 42 erfassten Reaktionsmitteltemperatur auf die gewünschte Temperatur erfolgen.

Es sei darauf hingewiesen, dass selbstverständlich die Abgas/Reaktionsmittel-Wärmetauscheranordnung 26 auch bei der in Fig. 7 dargestellten Ausgestaltungsform so aufgebaut sein kann, wie in einer der vorangehend beschriebenen Ausgestaltungsformen.

Die Fig. 8 zeigt eine Ausgestaltungsform einer Abgasanlage, bei welcher die Heizanordnung 24 nur die Abgas/Reaktionsmittel-Wärmetauscheranordnung 26, jedoch keine elektrisch betreibbare Heizeinheit umfasst. Dies bedeutet, dass bei der in Fig. 8 dargestellten Ausgestaltungsart eine Temperaturregelung des über die Reaktionsmitteleinspritzanordnung 20 abzugebenden Reaktionsmittels R im Wesentlichen nicht erfolgen kann. Vielmehr ist bei dieser Ausgestaltung vorteilhafterweise die Abgas/Reaktionsmittel-Wärmetauscheranordnung 26 derart dimensioniert bzw. aufgebaut, dass durch ausreichende thermische Wechselwirkung mit dem Abgas im abgasführenden Rohr 12 das Erwärmen des abzugebenden Reaktionsmittels auf die gewünschte Temperatur, insbesondere eine Überhitzungstemperatur, gewährleistet werden kann.

Auch bei dieser Ausgestaltungsform kann die Temperatur des Reaktionsmittels durch den Temperatursensor 42 erfasst werden, so dass, auch unter Berücksichtigung des vom Drucksensor 40 gelieferten Drucksignals, die Reaktionsmittelförderanordnung 18 derart angesteuert werden kann, dass der Reaktionsmitteldruck im Bereich der Reaktionsmittelleitung 16 zwischen der Reaktionsmittelförderanordnung 18 und der Reaktionsmittelabgabeanordnung 20 über dem Dampfdruck des in der Heizanordnung 24 vorteilhafterweise auf eine Überhitzungstemperatur erwärmten Reaktionsmittels liegt.

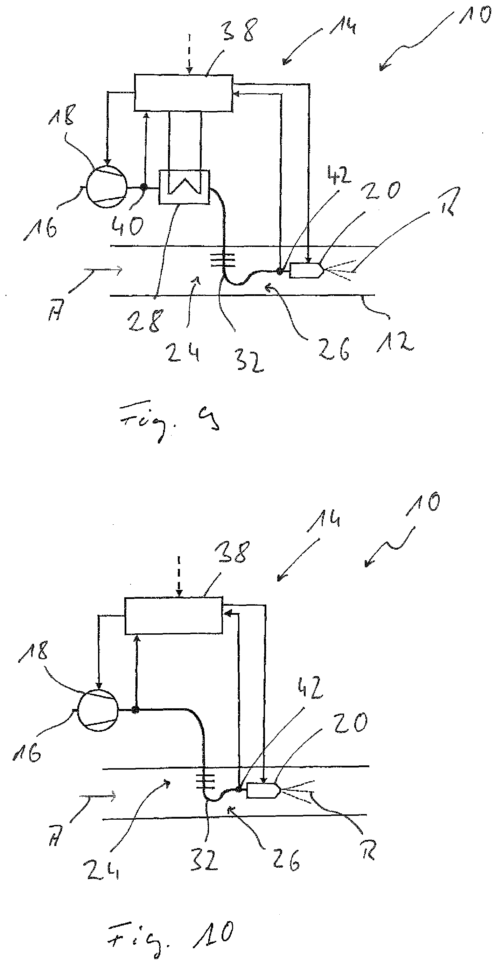

Die Fig. 9 zeigt eine Abgasanlage 10, bei welcher die Abgabe des Reaktionsmittels R in einen beispielsweise im Wesentlichen geradlinig sich erstreckenden Bereich des abgasführenden Rohrs 12 erfolgt. Die Reaktionsmittelabgabeanordnung 20 kann zu diesem Zwecke beispielsweise im Querschnittsmittenbereich des abgasführenden Rohrs 12 anschließend an den Wärmetauscherleitungsbereich 32 der Abgas/Reaktionsmittel-Wärmetauscheranordnung 26 angeordnet sein. Auch der Temperatursensor 42 kann in diesem Bereich stromaufwärts bezüglich der Reaktionsmitteleinspritzanordnung 20 und stromabwärts bezüglich der Heizanordnung 24, welche in diesem Ausgestaltungsbeispiel auch wieder eine elektrisch betreibbare Heizeinheit 28 umfasst, positioniert sein.

Die Abgas/Reaktionsmittel-Wärmetauscheranordnung 26 kann auch bei dieser Ausgestaltungsart die vorangehend mit Bezug auf die Fig. 1 bis 6 beschriebenen Ausgestaltungsformen aufweisen. Der wesentliche Unterschied ist, dass der Ankopplungsbereich zur Reaktionsmitteleinspritzanordnung 20 im Inneren 30 des abgasführenden Rohrs 12 liegt. Dies wiederum bedingt, dass vorteilhafterweise die Heizeinheit 28 stromaufwärts bezüglich der Abgas/Reaktionsmittel-Wärmetauscheranordnung 26 und somit außerhalb des abgasführenden Rohrs 12 liegt.

Die Fig. 10 zeigt eine Abwandlung der in Fig. 9 dargestellten Abgasanlage. Die Abgasanlage der Fig. 10 umfasst eine Heizanordnung 24, welche wiederum lediglich die Abgas/Reaktionsmittel-Wärmetauscheranordnung 26, jedoch keine elektrisch betreibbare Heizeinheit umfasst. Der Wärmeeintrag erfolgt somit ausschließlich durch thermische Wechselwirkung mit dem im abgasführenden Rohr 12 strömenden Abgas A, wobei durch Erfassung der Temperatur des Reaktionsmittels R und des Drucks des Reaktionsmittels R vermittels der Sensoren 42, 40 die Möglichkeit gegeben ist, die Reaktionsmittelförderanordnung 18 derart anzusteuern, dass der Reaktionsmitteldruck vorzugsweise um eine vorbestimmte Druckdifferenz über dem in Zuordnung zur Reaktionsmitteltemperatur jeweils vorhandenen Dampfdruck liegt.

## Patentansprüche

1. Abgasanlage für eine Brennkraftmaschine, insbesondere für ein Fahrzeug, umfassend ein abgasführendes Rohr (12) und eine Reaktionsmittelabgabeanordnung (14) zur Abgabe von Reaktionsmittel (R) in in dem abgasführenden Rohr (12) strömendes Abgas (A), wobei die Reaktionsmittelabgabeanordnung (14) eine Reaktionsmitteleinspritzanordnung (20), eine Reaktionsmittel (R) von einem Reaktionsmittelreservoir zu der Reaktionsmitteleinspritzanordnung (20) fördernde Reaktionsmittelförderanordnung (18) und eine Heizanordnung (24) zur Erwärmung von zu der Reaktionsmitteleinspritzanordnung (20) gefördertem Reaktionsmittel (R) umfasst, wobei die Heizanordnung (24) eine Abgas/Reaktionsmittel-Wärmetauscheranordnung (26) zur Übertragung von in dem Abgas (A) transportierter Wärme auf das Reaktionsmittel (R) umfasst, wobei eine Ansteueranordnung (38) zum Ansteuern der Reaktionsmittelförderanordnung (18) und der Reaktionsmittelabgabeanordnung (20) ausgebildet ist, wobei im Strömungsweg des Reaktionsmittels (R) zwischen der Reaktionsmittelförderanordnung (18) und der Reaktionsmitteleinspritzanordnung (20) wenigstens ein Reaktionsmitteldrucksensor (40) vorgesehen ist und die Ansteueranordnung (38) dazu ausgebildet ist, die Reaktionsmittelförderanordnung (18) beruhend auf einem von dem Reaktionsmitteldrucksensor (40) erfassten Reaktionsmitteldruck anzusteuern, und wobei im Strömungsweg des Reaktionsmittels (R) zwischen der Heizanordnung (24) und der Reaktionsmitteleinspritzanordnung (20) wenigstens ein Reaktionsmitteltemperatursensor (42) vorgesehen ist und die Ansteueranordnung (38) dazu ausgebildet ist, die Reaktionsmittelförderanordnung (18) beruhend auf einer von dem Reaktionsmitteltemperatursensor erfassten Reaktionsmitteltemperatur anzusteuern, wobei die Heizanordnung (24) eine elektrisch betreibbare Heizeinheit (28) umfasst und die Ansteueranordnung (38) zum Ansteuern der elektrisch betreibbaren Heizeinheit (28) der Heizanordnung (24) ausgebildet ist,
**dadurch gekennzeichnet, dass** der Reaktionsmitteldrucksensor (40) stromaufwärts bezüglich der elektrisch betreibbaren Heizeinheit (28) angeordnet ist.

2. Abgasanlage nach Anspruch 1, **dadurch gekennzeichnet, dass** die Abgas/Reaktionsmittel-Wärmetauscheranordnung (26) einen Wärmetauscherleitungsbereich (32) in einer Reaktionsmittel (R) zu der Reaktionsmitteleinspritzanordnung (20) führenden Reaktionsmittelleitung (16) umfasst.

3. Abgasanlage nach Anspruch 2 **dadurch gekennzeichnet, dass** der Wärmetauscherleitungsbereich (32) sich wenigstens bereichsweise, vorzugsweise im Wesentlichen vollständig, im Inneren (30) des abgasführenden Rohrs (12) erstreckt.

4. Abgasanlage nach Anspruch 3, **dadurch gekennzeichnet, dass** der Wärmetauscherleitungsbereich (32) sich im Inneren (30) des abgasführenden Rohrs (12) windungsartig erstreckt, vorzugsweise schraubenartig oder/und spiralartig oder/und mäanderartig.

5. Abgasanlage nach Anspruch 3 oder 4, **dadurch gekennzeichnet, dass** der Wärmetauscherleitungsbereich (32) sich nahe einer Innenoberfläche (50) oder/und an einer Innenoberfläche (50) des abgasführenden Rohrs (12) anliegend erstreckt.

6. Abgasanlage nach einem der Ansprüche 3-5, **dadurch gekennzeichnet, dass** an dem Wärmetauscherleitungsbereich (32) wenigstens eine, vorzugsweise eine Mehrzahl von Wärmeübertragungsrippen (46) vorgesehen ist, vorzugsweise mit zu einer Abgasströmungsrichtung im Wesentlichen parallelen Wärmeübertragungsoberflächen (48).

7. Abgasanlage nach einem der Ansprüche 2-6, **dadurch gekennzeichnet, dass** der Wärmetauscherleitungsbereich (32) sich wenigstens bereichsweise, vorzugsweise im Wesentlichen vollständig außerhalb des abgasführenden Rohrs (12) erstreckt.

8. Abgasanlage nach Anspruch 7, **dadurch gekennzeichnet, dass** der Wärmetauscherleitungsbereich (32) sich nahe einer Außenoberfläche (52) oder/und an einer Außenoberfläche (52) des abgasführenden Rohrs (12) anliegend erstreckt, vorzugsweise dieses schraubenartig oder/und mäanderartig umgebend.

9. Abgasanlage nach Anspruch 7 oder 8, **dadurch gekennzeichnet, dass** das abgasführende Rohr (12) wenigstens in seinem mit dem Wärmetauscherleitungsbereich (32) zusammenwirkenden Längenbereich von Isoliermaterial (54) wenigstens bereichsweise umgeben ist.

10. Abgasanlage nach einem der Ansprüche 1-9, **dadurch gekennzeichnet, dass** die Reaktionsmittelförderanordnung (18) in Strömungsrichtung des Reaktionsmittels (R) stromaufwärts der Heizanordnung (24) angeordnet ist.

11. Abgasanlage nach einem der Ansprüche 1-10, **dadurch gekennzeichnet, dass** die Heizeinheit (28) in Strömungsrichtung des Reaktionsmittels (R) stromaufwärts bezüglich des Wärmetauscherleitungsbereichs (32) angeordnet ist.

12. Abgasanlage nach einem der Ansprüche 1-10, **dadurch gekennzeichnet, dass** die Heizeinheit (28) in Strömungsrichtung des Reaktionsmittels (R) stromabwärts bezüglich des Wärmetauscherleitungsbereichs (32) angeordnet ist.

13. Abgasanlage nach einem der Ansprüche 1-12, **dadurch gekennzeichnet,**
- **dass** die Ansteueranordnung (38) dazu ausgebildet ist, die elektrisch betreibbare Heizeinheit (28) der Heizanordnung (24) oder/und die Reaktionsmitteleinspritzanordnung (20) beruhend auf einem von dem Reaktionsmitteldrucksensor (40) erfassten Reaktionsmitteldruck anzusteuern,
oder/und,
- **dass** die Ansteueranordnung (38) dazu ausgebildet ist, die elektrisch betreibbare Heizeinheit (28) der Heizanordnung (24) oder/und die Reaktionsmitteleinspritzanordnung (20) beruhend auf einer von dem Reaktionsmitteltemperatursensor erfassten Reaktionsmitteltemperatur anzusteuern.

14. Verfahren zum Betreiben einer Abgasanlage nach Anspruch 13, wobei die Ansteueranordnung (38) die Reaktionsmittelförderanordnung (18) derart ansteuert, dass der Reaktionsmitteldruck über dem Dampfdruck des durch die Heizanordnung (24) erwärmten Reaktionsmittels (R) liegt.

15. Verfahren nach Anspruch 14, **dadurch gekennzeichnet, dass** die Ansteueranordnung (38) die elektrisch betreibbare Heizeinheit (28) derart ansteuert, dass das durch die Heizanordnung (24) erwärmte Reaktionsmittel (R) in einen Überhitzungszustand gebracht wird, vorzugsweise derart, dass die Reaktionsmitteltemperatur im Bereich einer Soll-Überhitzungstemperatur liegt.

## Claims

1. Exhaust gas system for an internal combustion engine, especially for a vehicle, comprising an exhaust gas pipe (12) and a reactant release arrangement (14) for releasing a reactant (R) into the exhaust gas stream (A) flowing inside the exhaust gas carrying pipe (12), wherein the reactant release arrangement (14) comprises a reactant injection arrangement (20), a reactant transport arrangement (18) transporting reactant (R) from a reactant reservoir to the reactant injection arrangement (20) and a heating arrangement (24) for heating reactant transported to the reactant injection arrangement (20), wherein the heating arrangement (24) comprises an exhaust gas/reactant heat exchanger arrangement (26) for transferring heat transported in the exhaust gas (A) to the reactant (R),
wherein an actuating arrangement (38) is adapted for actuating the reactant transport arrangement (18) and the reactant injection arrangement (20), wherein in the flow path of the reactant (R) between the reactant transport arrangement (18) and the reactant injection arrangement (20) at least one reactant pressure sensor (40) is provided and wherein the actuating arrangement (38) is adapted for actuating the reactant transport arrangement (18) based on a reactant pressure detected by the reactant pressure sensor (40), and wherein in the flow path of the reactant (R) between the heating arrangement (24) and the reactant injection arrangement (20) at least one reactant temperature sensor (42) is provided and the actuating arrangement (38) is adapted for actuating the reactant transport arrangement (18) based on a reactant temperature detected by the reactant temperature sensor, wherein the heating arrangement (24) comprises an electrically operable heating unit (28) and the actuating arrangement (38) is adapted for actuating the electrically operable heating unit (28) of the heating arrangement (24),
**characterized in that** the reactant pressure sensor (40) is arranged upstream of the electrically operable heating unit (28).

2. Exhaust gas system in accordance with claim 1, **characterized in that** the exhaust gas/reactant heat exchanger arrangement (26) comprises a heat exchanger line area (32) in a reactant line (16) sending reactant (R) to the reactant injection unit (20).

3. Exhaust gas system in accordance with claim 2, **characterized in that** the heat exchanger line area (32) extends, in at least some sections, preferably essentially completely in the interior (30) of the exhaust gas-carrying pipe (12).

4. Exhaust gas system in accordance with claim 3, **characterized in that** the heat exchanger line area (32) extends in the interior (30) of the exhaust gas-carrying pipe (12) in a winding-like manner, preferably helically or/and spirally or/and in a meandering manner.

5. Exhaust gas system in accordance with claim 3 or 4, **characterized in that** the heat exchanger line area (32) extends close to an inner surface (50) or/and abutting at an inner surface (50) of the exhaust gas-carrying pipe (12).

6. Exhaust gas system in accordance with one of the claims 3-5, **characterized in that** at least one and preferably a plurality of heat transfer ribs (46) are provided in the heat exchanger line area (32), preferably with heat transfer surfaces (48) extending essentially parallel to an exhaust gas flow direction.

7. Exhaust gas system in accordance with one of the claims 2-6, **characterized in that** the heat exchanger line area (32) extends, in at least some sections, preferably essentially completely outside the exhaust gas-carrying pipe (12).

8. Exhaust gas system in accordance with claim 7, **characterized in that** the heat exchanger line area (32) extends close to an outer surface (52) or/and abutting at an outer surface (52) of the exhaust gas-carrying pipe (12), preferably surrounding the same in a helical or/and meandering manner.

9. Exhaust gas system in accordance with claim 7 or 8, **characterized in that** the exhaust gas-carrying pipe (12) is surrounded, in at least some sections, by insulating material (54) at least in its length area interacting with the heat exchanger line area (32).

10. Exhaust gas system in accordance with one of claims 1-9, **characterized in that** the reactant transport arrangement (18) is arranged upstream in relation to the heating arrangement (24) in the direction of flow of the reactant (R).

11. Exhaust gas system in accordance with one of claims 1-10, **characterized in that** the heating unit (28) is arranged upstream in relation to the heat exchanger line area (32) in the direction of flow of the reactant (R).

12. Exhaust gas system in accordance to one of claims 1-10, **characterized in that** the heating unit (28) is arranged downstream in relation to the heat exchanger line area (32) in the direction of flow of the reactant (R).

13. Exhaust gas system in accordance with one of the claims 1-12, **characterized in that**
- the actuating unit (38) is adapted for actuating the electrically operable heating unit (28) of the heating arrangement (24) or/and the reactant injection arrangement (20) on the basis of a reactant pressure detected by the reactant pressure sensor (40), or/and
- the actuating unit (38) is adapted for actuating the electrically operable heating unit (28) of the heating arrangement (24) or/and the reactant injection arrangement (20) on the basis of a reactant temperature detected by the reactant temperature sensor.

14. Method for operating an exhaust gas system in accordance with claim 13, wherein the actuating unit (38) actuates the reactant transport arrangement (18) such that the reactant pressure is above the vapor pressure of the reactant (R) heated by the heating arrangement (24).

15. Method in accordance with claim 14, **characterized in that** the actuating unit (38) actuates the electrically operable heating unit (28) such that the reactant (R) heated by the heating arrangement (24) is brought into a superheated state, preferably such that the reactant temperature is in the range of a desired superheated temperature.

## Revendications

1. Système de gaz d'échappement pour un moteur à combustion interne, en particulier pour un véhicule, comprenant un tube de gaz d'échappement (12) et un arrangement de libération de réactif (14) pour libérer du réactif (R) dans le gaz d'échappement (A) s'écoulant dans le tube de gaz d'échappement (12), l'arrangement de libération de réactif (14) comprenant un arrangement d'injection de réactif (20), un arrangement de transport de réactif (18) transportant du réactif (R) d'un réservoir de réactif vers l'arrangement d'injection de réactif (20) et un arrangement de chauffage (24) pour chauffer du réactif (R) transporté vers l'arrangement d'injection de réactif (20), l'arrangement de chauffage (24) comprenant un arrangement d'échangeur de chaleur gaz d'échappement/réactif (26) pour transférer la chaleur transportée dans le gaz d'échappement (A) au réactif (R), un arrangement de commande (38) adapté pour commander l'arrangement de transport de réactif (18) et l'arrangement d'injection de réactif (20), où au moins un capteur de pression de réactif (40) est prévu dans la voie d'écoulement du réactif (R) entre l'arrangement de transport de réactif (18) et l'arrangement d'injection de réactif (20) et où l'arrangement de commande (38) est adapté pour commander l'arrangement de transport de réactif (18) sur la base d'une pression de réactif détecté par le capteur de pression de réactif (40) et où au moins un capteur de température de réactif (42) est prévu dans la voie d'écoulement du réactif (R) entre l'arrangement de chauffage (24) et l'arrangement d'injection de réactif (20), et où l'arrangement de commande (38) est adapté pour commander l'arrangement de transport de réactif (18) sur la base d'une température de réactif détectée par le capteur de température de réactif, l'arrangement de chauffage (24) comprenant une unité de chauffage électriquement opérable (28) et l'arrangement de commande (38) étant adapté pour commander l'unité de chauffage électriquement opérable (28) de l'arrangement de chauffage (24),
**caractérisé en ce que** le capteur de pression de réactif (40) est arrangé en amont par rapport à l'unité de chauffage électriquement opérable (28).

2. Système de gaz d'échappement selon la revendication 1, **caractérisé en ce que** l'arrangement d'échangeur de chaleur gaz d'échappement/réactif (26) comprend une région de conduit d'échangeur de chaleur (32) dans un conduit de réactif (16) transportant du réactif (R) vers l'arrangement d'injection de réactif (20).

3. Système de gaz d'échappement selon la revendication 2, **caractérisé en ce que** la région de conduit d'échangeur de chaleur (32) s'étend au moins en partie, de préférence entièrement dans l'intérieur (30) du tube de gaz d'échappement (12).

4. Système de gaz d'échappement selon la revendication 3, **caractérisé en ce que** la région de conduit d'échangeur de chaleur (32) s'étend dans l'intérieur (30) du tube de gaz d'échappement (12) en bobine, de préférence de manière hélicoïdale et/ou en spirale et/ou en forme de méandres.

5. Système de gaz d'échappement selon la revendication 3 ou 4, **caractérisé en ce que** la région de conduit d'échangeur de chaleur (32) s'étend en appui près d'une surface intérieur (50) ou/et à une surface intérieur (50) du tube de gaz d'échappement (12).

6. Système de gaz d'échappement selon une des revendications 3-5, **caractérisé en ce qu'**au moins une, de préférence une pluralité de nervures de transfert de chaleur (46), est prévue dans la région de conduit d'échangeur de chaleur (32) de préférence avec des surfaces de transfert de chaleur (48) essentiellement parallèles à un sens d'écoulement de gaz d'échappement.

7. Système de gaz d'échappement selon une des revendications 2-6, **caractérisé en ce que** la région de conduit d'échangeur de chaleur (32) s'étend au moins en partie, de préférence entièrement en dehors du tube de gaz d'échappement (12).

8. Système de gaz d'échappement selon la revendication 7, **caractérisé en ce que** la région de conduit d'échangeur de chaleur (32) s'étend en appui près d'une surface extérieure (52) ou/et à une surface extérieure (52) du tube de gaz d'échappement (12) et l'entoure de préférence de manière hélicoïdale et/ou en forme de méandres.

9. Système de gaz d'échappement selon la revendication 7 ou 8, **caractérisé en ce que** le tube de gaz d'échappement (12) est entouré au moins en partie par du matériau isolant (54), au moins dans sa région longitudinale coopérant avec la région de conduit d'échangeur de chaleur (32).

10. Système de gaz d'échappement selon une des revendications 1-9, **caractérisé en ce que** l'arrangement de transport de réactif (18) est arrangé en amont de l'arrangement de chauffage (24) dans le sens d'écoulement du réactif (R).

11. Système de gaz d'échappement selon une des revendications 1-10, **caractérisé en ce que** l'unité de chauffage (28) est arrangée en amont dans le sens d'écoulement du réactif (R) par rapport à la région de conduit d'échangeur de chaleur (32).

12. Système de gaz d'échappement selon une des revendications 1-10, **caractérisé en ce que** l'unité de chauffage (28) est arrangée en aval dans le sens d'écoulement du réactif (R) par rapport à la région de conduit d'échangeur de chaleur (32).

13. Système de gaz d'échappement selon une des revendications 1-12, **caractérisé en ce que**
- l'arrangement de commande (38) est adapté pour commander l'unité de chauffage électriquement opérable (28) de l'arrangement de chauffage (24) ou/et l'arrangement d'injection de réactif (20) sur la base d'une pression de réactif détectée par le capteur de pression de réactif (40),
ou/et
- l'arrangement de commande (38) est adapté pour commander l'unité de chauffage électriquement opérable (28) de l'arrangement de chauffage (24) ou/et l'arrangement d'injection de réactif (20) sur la base d'une température de réactif détectée par le capteur de température de réactif.

14. Procédé pour opérer un système de gaz d'échappement selon la revendication 13, l'arrangement de commande (38) commandant l'arrangement de transport de réactif (18) de sorte que la pression de réactif est plus grande que la pression de vapeur du réactif (R) chauffé par l'arrangement de chauffage (24).

15. Procédé selon la revendication 14, **caractérisé en ce que** l'arrangement de commande (38) commande l'unité de chauffage électriquement opérable (28) de sorte que le réactif (R) chauffé par l'arrangement de chauffage (24) est amené dans un état surchauffé, de manière de sorte que la température de réactif est dans la gamme d'une température de surchauffe désirée.
